# EUROPÄISCHE PATENTSCHRIFT

(11) **EP 4 152 469 B1**
(45) Veröffentlichungstag und Bekanntmachung des Hinweises auf die Patenterteilung: **05.06.2024**
(21) Anmeldenummer: 21197510.7
(22) Anmeldetag: 17.09.2021
(51) Int. Cl.: B32B 37/12, B32B 37/20, B32B 37/22, B32B 38/18, H01M 10/04, H01M 10/0585

(54) **VERFAHREN UND VORRICHTUNG ZUM HERSTELLEN EINES ELEKTRODEN-SEPARATOR-VERBUNDS FÜR EINE BATTERIEZELLE**
METHOD AND DEVICE FOR CREATING AN ELECTRODE-SEPARATOR UNIT FOR A BATTERY CELL
PROCÉDÉ ET DISPOSITIF DE FABRICATION D'UN ASSEMBLAGE D'ÉLECTRODES ET DE SÉPARATEUR POUR UN ÉLÉMENT DE BATTERIE

(43) Veröffentlichungstag der Anmeldung: 22.03.2023
(73) Patentinhaber: Technische Universität Berlin, 10623 Berlin (DE)
(72) Erfinder: MÜLLER, Alexander, 13086 Berlin (DE); AYDEMIR, Muhammed, 12249 Berlin (DE); KAHL, Moritz, 10439 Berlin (DE); DIETRICH, Franz, 10825 Berlin (DE)
(74) Vertreter: Bittner, Thomas L.

(56) Entgegenhaltungen:
- EP-B1- 2 696 427
- JP-B2- 5 827 027

## Beschreibung

Die Erfindung betrifft ein Verfahren und eine Vorrichtung zum Herstellen eines Elektroden-Separator-Verbunds für eine Batteriezelle.

### Hintergrund

Elektrochemische Speicher wie Batteriezellen bestehen aus einem Verbund mit positiven und negativen Elektroden, die durch einen Separator physisch getrennt sind. Die kleinste funktionale Einheit einer Batteriezelle (galvanische Zelle) besteht aus einer positiven und einer negativen Elektrode mit einer dazwischenliegenden Separatorschicht. Häufig werden im Energiespeicher eine Reihenschaltung mehrerer galvanischer Zellen mit dem Ziel der Kapazitätserhöhung vorgenommen. Damit diese Reihenschaltung keine Reaktion mit dem Gehäuse eingeht, beginnt der Verbund immer mit einer Separatorschicht und schließt auch mit einer Separatorschicht ab.

Zur Herstellung eines Elektrode-Separator-Verbundes (ESV) werden je nach gewünschter Bauform der Batteriezelle unterschiedliche Herstellungsverfahren eingesetzt. Im Stand der Technik wird insbesondere zwischen vier ESV-Bauweisen unterschieden: Die rundgewickelte und die prismatisch gewickelte Verbundbauweise, die Stapelbauweise sowie die z-gefaltete Verbundbauweise. Bei gewickelten Bauweisen liegen Elektroden und Separatoren bandförmig vor und werden zusammen aufgewickelt. Bei der Stapelbauweise liegen die Batteriematerialien als diskrete Einzelblätter vor und werden durch Pick-and-Place Bewegungen aufeinandergestapelt. Bei der z-gefalteten Bauweise liegt in der Regel der Separator bandförmig vor und wird mäanderförmig gefaltet. Diskrete Elektroden werden, wie bei der Stapelbauweise, durch Pick-and-Place Bewegungen in die Falttaschen eingelegt.

Die Stapelbildung ist in der Fertigung von hochkapazitiven Zellen mit gestapeltem oder z-gefaltetem ESV der geschwindigkeitsbestimmende Prozessabschnitt und limitiert damit den Durchsatz in der Herstellung von Batteriezellen. Eine Durchsatzsteigerung durch Geschwindigkeitserhöhung oder Parallelisierung bei bestehenden Verfahren zur ESV-Herstellung zeigt aufgrund notwendiger Stillstände im Verfahrensablauf eine kaum zu überwindende Durchsatzlimitierung. Stillstände im Verfahrensablauf sind erforderlich, um eine hohe Genauigkeit bei den eingesetzten Pick-and-Place-Anwendungen zum Fügen von Elektroden und Separatoren zu erreichen. Die Tatsache, dass die Rücksetzbewegung beim Pick-and-Place nichtwertschöpfende Montagezeit beansprucht und Stillstände im Verfahrensablauf zum Fügen der Elektroden mit dem Separator erforderlich sind, motiviert Industrie und Wissenschaft zur Suche nach alternativen, durchsatzstarken Ansätzen zur Stapelbildung.

In diesem Innovationsfeld erhält das Warmlaminieren von Elektrode und Separator zunehmende Aufmerksamkeit. Einerseits erlauben die so hergestellten Elektrode-Separator-Laminate als Zwischenprodukt aufgrund ihrer höheren Handhabungsfestigkeit eine höhere Pick-and-Place-Geschwindigkeit, andererseits ergibt sich durch die Vormontage eine Parallelisierung des ESV-Herstellungsprozesses, wodurch ein Multiplikationseffekt in der Durchsatzsteigerung erreicht wird. Für das Laminieren befindet sich der für den Fügeprozess notwendige Fügehilfsstoff bereits in einem der beiden Fügepartner (Elektrode oder Separator). Damit beide Objekte miteinander gefügt werden können, wird der enthaltene Klebstoff aufgeheizt. Für das Aufheizen wird entweder eine Vorheizstrecke oder ein beheiztes Walzenpaar verwendet. Demnach wird der in den Fügepartnern enthaltene Klebstoff im Vorfeld oder während des Aneinanderdrückens der Fügepartner durch das Walzenpaar aufgeheizt und der Elektrode-Separator-Laminat hergestellt. Dieses Laminat wird anschließend als Zwischenprodukt der stapelnden oder z-faltenden ESV-Herstellung zugeführt.

Für Elektrode-Separator-Laminate als Zwischenprodukt zur späteren Reihenschaltung sind unterschiedliche Ausführungen in Bezug auf die Anzahl und die Anordnung der Schichten bekannt. So sind Ausführungen vorgesehen, die als Halbzelle einen Separator mit einer Elektrode sowie vereinzelt mit einem weiteren Separator darstellen. Weiterhin wird der Begriff Monozelle für einen Verbund bestehend aus einer positiven und negativen Elektrode mit einer dazwischenliegenden Separatorschicht verstanden. Als Bi-Zelle hingegen, wird ein Verbund mit der Reihenfolge positive Elektrode, Separator, negative Elektrode und Separator oder negative Elektrode, Separator, positive Elektrode und Separator verstanden. Weiterhin können die Materialien kontinuierlich, d.h. als Bandmaterial oder zugeschnitten als Blätter vorliegen. Bei bandförmigen Elektroden können diese kontinuierlich oder intermittierend beschichtet sein.

Im Dokument EP 2 757 625 B1 wird ein Verfahren zum stufenweisen mehrfachen Laminieren einer Bi-Zelle zu einem stapelfähigen Zwischenprodukt beschrieben.

In dem Dokument DE 10 2018 219 000 A1 wird ein Verfahren zur Herstellung einer Halbzelle mittels Laminieren offenbart, wobei als Handhabungseinrichtung ein Vakuumband oder eine Laminiereinrichtung eingesetzt werden.

Im Dokument DE 601 04 890 T2 wird ein Verfahren für das Heiß-Laminieren von Anode und Kathode mittels einer Rotationsumformungslaminiermaschine beschrieben.

Dokument EP 2 830 139 A1 offenbart eine Vorrichtung zum Laminieren von Anoden und Kathoden, welche auch diskretisieren kann.

In dem Dokument DE 10 2014 113 588 A1 beschreibt ein Verfahren zur Herstellung von Elektrode-Separator-Laminaten bestehend aus zwei bandförmigen Separatoren und einem dazwischenliegenden Elektrodenblatt. Eine Fügeverbindung zwischen dem ersten bandförmigen Separator und dem Elektrodenblatt wird realisiert mittels Auftrag eines Klebstoffs. Der Klebstoff wird dabei auf die Separatorbahn aufgetragen. Eine Fügeverbindung zwischen den beiden bandförmigen Separatoren erfolgt durch Laserschweißen. Die Handhabung der bandförmigen Separatoren und der Elektrodenblätter erfolgt mittels Einsatz eines Vakuumbandes, das aufgrund der Porosität des Separators auch durch diesen hindurch eine Zugbelastung und damit eine Kraftwirkung auf die aufgelegte Elektrode ausüben kann. Durch anschließendes Trennen des Separatorbands werden eine oder mehrere diskrete Halbzellen gebildet.

Im Dokument WO 2008 / 080507 A1 wird ein Verfahren zur Herstellung einer Halbzelle mit einer auf den Separator aufgeklebten Elektrode beschrieben. Dabei wird im Vorfeld zum Kleben der Separator mit einem chemischen Primer aktiviert. Beim oder nach dem Kleben wird der Schichtverbund aneinandergepresst.

In dem Dokument DE 10 2010 055 053 A1 werden ein Verfahren und ein System zur Strukturierung von blattförmigen Elektroden beschrieben. Um beide gegenüberliegenden Oberflächen eines Elektrodenblattes zu strukturieren, wird das Elektrodenblatt stufenweise über mehrere Vakuumbänder transportiert. Die Vakuumbänder sind in ihrer Anordnung so gewählt, dass beide Oberflächen nacheinander für die Strukturierung zugänglich sind.

In dem Dokument EP 2 641 286 B1 werden ein Verfahren und eine Vorrichtung zur Reinigung von Elektroden oder Separatoren offenbart, wobei ihre Handhabung zwischen den Reinigungsvorrichtungen über (Vakuum-)Transportbänder erfolgt.

Dokument DE 10 2017 216 213 A1 offenbart ein Verfahren zur Herstellung eines Elektrodenstapels, bei dem ein Vakuumrad eingesetzt wird, um Elektroden zuzuschneiden und auf einem Vakuum-Werkstückträger abzulegen.

Das Dokument JP 5 827 027 B2 offenbart eine Vorrichtung zum Fördern eines Separators.

Um bei der Herstellung erlaubte Temperaturgradienten und die Mindest-Anschmelz- und Kontaktverweilzeit einzuhalten, werden immer längere Vorwärmstrecken erforderlich. Der hierdurch zunehmende Platzbedarf der Anlagen führt zu wirtschaftlichen Einschränkungen hinsichtlich des zu betreibenden Trockenraums. Weiterhin schränkt das Laminieren die Materialauswahl ein: Der Separator oder die Elektroden müssen aufschmelzbare Anteile mitführen und hohe Temperatur und -gradienten ertragen; alle Materialien müssen auf die haftvermittelnde Druckbelastung vorbereitet sein. Diese Einschränkung wird heutzutage durch Automobil- und Zellhersteller zugunsten des höheren Durchsatzes im Vergleich zum konventionellen Stapeln oder z-Falten toleriert.

### Zusammenfassung

Aufgabe der Erfindung ist es, ein Verfahren und eine Vorrichtung zum Herstellen eines Elektroden-Separator-Verbunds für eine Batteriezelle anzugeben, die eine effiziente und zeitsparende Herstellung des Elektroden-Separator-Verbunds unterstützen.

Zur Lösung sind ein Verfahren sowie eine Vorrichtung zum Herstellen eines Elektroden-Separator-Verbunds für eine Batteriezelle nach den unabhängigen Ansprüchen 1 und 13 geschaffen. Ausgestaltungen sind Gegenstand von abhängigen Unteransprüchen.

Mit Hilfe der vorgeschlagenen Technologie ist es ermöglicht, dem Elektroden-Separator-Verbund auch in großer Stückzahl mit hoher Genauigkeit und zeitsparend herzustellen. Ausgestaltung und Betrieb der Vakuumwalze unterstützen ein positionsgenaues exaktes Fügen von Separatormaterial und Elektrode. Die mit Walzenansaugeinrichtung und Walzendüseneinrichtung ausgebildeten unterschiedlichen Oberflächenbereiche am Walzenkörper ermöglichen ein ausreichendes Halten der Elektrode an der Oberfläche des Walzenkörpers zum Transport und Zuführen einerseits und ein zielgenaues Ablösen der Elektrode vom Walzenkörper zum Separatormaterial hin beim Fügen. Auch unterstützt die Ausbildung der Vakuumwalze mit den unterschiedlichen Oberflächenbereichen die Handhabung von Elektroden unterschiedlicher Größe je nach Anwendungsfall.

Vor dem Fügen kann auf der Elektrode und / oder dem Separatormaterial in einem ersten Oberflächenbereich ein Haftmittel aufgetragen werden, und die Elektrode kann beim Fügen zum Ausbilden einer Haftverbindung zwischen Elektrode und Separatormaterial in dem ersten Oberflächenbereich oder einem dem ersten Oberflächenbereich am Separatormaterial gegenüberliegenden Bereich mittels der Walzendüseneinrichtung von der Vakuumwalze weg zu dem Separatormaterial hin gedrückt werden. Auf diese Weise erfolgt das Fügen des Materials der Elektrode und des Separatormaterials gezielt und (zuerst) bevorzugt in den Bereichen, auf die vorher das Haftmittel aufgetragen wurde, sei es auf die Elektrode und / oder das Separatormaterial. Auf diese Weise ist es ermöglicht, die mit Haftmittel versehenen Oberflächenbereiche in möglichst geringem zeitlichen Abstand zum Auftragen des Haftmittels gezielt zu fügen. Hierbei kann vorgesehen sein, dass voneinander beabstandete und getrennte Oberflächenbereiche, die jeweils mit Haftmittel versehen sind, mittel zugeordneter Düsen der Walzendüseneinrichtung zum Fügen von der Vakuumwalze gelöst und zum Separatormaterial hin bewegt und gedrückt werden. Auf diese Weise kann die Elektrode wahlweise zunächst in den mit dem Haftmittelbereich versehenen Oberflächenbereichen (Kontaktbereiche) mit dem Separatormaterial gefügt werden, um dann in zeitlichem Abstand hierzu auch zunächst nicht mit Haftmittel versehene Oberflächenbereiche zu fügen. Auf diese Weise kann insbesondere vermieden werden, dass an dem Separatormaterial Knicke oder Falten entstehen, was die korrekte Herstellung des Elektroden-Separator-Verbunds zumindest behindern kann.

Ein zweiter Elektrodenoberflächenbereich, welcher von dem ersten Elektrodenoberflächenbereich verschieden ist, kann frei von Haftmittel bleiben, und der zweite Elektrodenoberflächenbereich kann beim Fügen frei von einer Druckbeaufschlagung durch die Walzendüseneinrichtung sein.

Die Haftverbindung kann mittels eines Klebeprozesses frei von einer Wärmezufuhr ausgebildet werden. Das Herstellen der Haftverbindung in einem Klebeprozess frei von Wärmezufuhr umfasst bevorzugt die Ausbildung der Haftverbindung bei Raumtemperatur, so dass der als Haftmittel verwendete Klebstoff bei Raumtemperatur aushärtet. Solche Klebstoffe sind als solche in verschiedenen Ausführungsformen bekannt.

Die Elektrode kann beim Fügen mittels mechanischer Druckbeaufschlagung durch den Walzenkörper der Vakuumwalze gegen das Separatormaterial gedrückt werden. Die mechanische Druckbeaufschlagung kann sich mit einem pneumatischen Druck überlagern, welcher beim Fügen mittels der Walzendüseneinrichtung aufgebracht wird.

Die Walzenansaugeinrichtung in dem ersten Oberflächenbereich und die Walzendüseneinrichtung in dem zweiten Oberflächenbereich des Walzenkörpers können beim Zuführen und beim Fügen unabhängig voneinander gesteuert werden, um die Elektrode bereichsweise an dem Walzenkörper zu halten und zu dem Separatormaterial hin zu drücken. Die Steuerung der Walzendüseneinrichtung sowie der Walzenansaugeinrichtung unabhängig voneinander ermöglicht es, die Ansaugwirkung einerseits und die Abstoßwirkung andererseits getrennt voneinander zu steuern und anzuwenden. Innerhalb des ersten und / oder des zweiten Oberflächenbereiches können bei dieser oder anderen Ausgestaltungen Oberflächenteilbereiche gebildet sein, für die die Walzenansaugeinrichtung oder die Walzendüseneinrichtung wiederum separat steuerbar ist, um in den getrennten Oberflächenteilbereichen die Saug- / Abstoßwirkung individuell einzustellen. Hierzu sind den Oberflächenbereichen oder den Oberflächenteilbereichen jeweilige Druckeinrichtungen zum Ausbilden von Unterdruck / Überdrück zugeordnet, die zumindest teilweise in einem Innenraum des Walzenkörpers angeordnet sein können, beispielsweise entsprechende Zuleitungen.

Die Walzendüseneinrichtung kann in dem zweiten Oberflächenbereich in Bezug auf die Walzenansaugeinrichtung in einem ersten Oberflächenbereich des Walzenkörpers zumindest einer der folgenden Anordnungen entsprechend ausgebildet sein: seitlich benachbart und zwischen mehreren zweiten Oberflächenbereichen. Die seitliche Nachbarschaft kann in axialer Richtung und / oder entlang eines Mantelbogens (radial) ausgebildet sein.

Es kann eine Vakuumwalze mit zumindest einer der folgenden Ausgestaltungen verwendet werden: Walzenansaugeinrichtung mit punktförmigen Ansaugöffnungen in dem ersten Oberflächenbereich und Walzendüseneinrichtung mit Langlochdüsen in dem zweiten Oberflächenbereich. Die Walzenansaugeinrichtung sowie die Walzendüseneinrichtung können bei dieser oder anderen Ausgestaltungen entlang der umlaufenden Oberfläche des Walzenkörpers durchgehend oder unterbrochen ausgebildet sein. In einer Ausgestaltung kann nur ein Teilbereich der Oberfläche des Walzenkörpers hiervon erfasst sein.

Die Elektrode kann mittels der Vakuumwalze beim Zuführen aus einer ersten Transportrichtung in eine zweite Transportrichtung umgelenkt werden, die quer zur ersten Transportrichtung verläuft und in welcher das Fügen ausgeführt wird. Zum Beispiel kann die Zuführung des Materials für die Elektrode in der ersten Transportrichtung in horizontaler Richtung erfolgen, wohingegen das Fügen an einem in vertikaler Richtung transportierten Separatormaterial erfolgt. Hierbei findet also eine Umlenkung von etwa 90 Grad statt.

Die Stützeinrichtung kann mit einer weiteren Vakuumwalze gebildet werden, die eingerichtet ist, der Arbeitsweise der Vakuumwalze entsprechend verwendet zu werden, eine weitere Elektrode mit Separatormaterial zu fügen. Die Stützeinrichtung dient in ihren unterschiedlichen Ausgestaltungen dazu, dass Separatormaterial beim Fügen auf der gegenüberliegenden Seite zur Vakuumwalze zu stützen, so dass der Anpressdruck für die Elektrode an dem Separatormaterial bereitgestellt werden kann. Die weitere Elektrode kann dem Vorgehen zum Fügen der Elektrode entsprechend am Separatormaterial gefügt werden, oder verschieden hiervon.

In einer Ausgestaltung ist der Vakuumwalze der weiteren Vakuumwalze gegenüberliegend angeordnet und bildet so einerseits zumindest einen Teil der Stützvorrichtung. Darüber hinaus ist die weitere Vakuumwalze vergleichbar der Vakuumwalze betreibbar, derart, dass sie im Betrieb die weitere Elektrode zuführt, um diese auf der gegenüberliegenden Seite mit dem Separatormaterial zu fügen.

Bei dieser oder anderen Ausführungsformen können die Elektrode und die weitere Elektrode auf den gegenüberliegenden Seiten des Separatormaterials einander unmittelbar gegenüberliegend angeordnet werden. Alternativ kann vorgesehen sein, dass die Elektrode und die weitere Elektrode auf gegenüberliegenden Seiten des Elektrodenmaterials in Längsrichtung des Separatormaterials versetzt zueinander angeordnet sind. Auf diese Weise können unterschiedliche Elektroden-Separator-Verbünde hergestellt werden. Hierfür können die Prozesse des Zuführens der Elektroden auf den gegenüberliegenden Seiten des Separatormaterials jeweils entsprechend zeitlich getaktet werden.

Das Separatormaterial kann mittels der Separatorzuführeinrichtung als ein Bandmaterial mit einer Bandgeschwindigkeit von wenigstens etwa 500 mm / s zugeführt werden. Das Bandmaterial für das Separatormaterial kann beispielsweise von einer Rolle zugeführt werden. Nach dem Fügen des Elektroden-Separator-Verbunds wird dieser mit Hilfe einer Trenneinrichtung von dem Bandmaterial getrennt. Es kann auch vorgesehen sein, dass Bandmaterial mit den mehreren Elektroden-Separator-Verbünden als Bandmaterial abzulegen, zum Beispiels mittels einer z-Faltung, wie dies beispielsweise in dem Dokument DE 10 2015 108 651 A1 beschrieben ist. In einer Ausgestaltung wird eine Bandgeschwindigkeit von bis zu etwa 3000 mm / s verwendet.

Der Elektroden-Separator-Verbund kann nach dem Fügen mittels einer der Vakuumwalze und der Stützeinrichtung nachgelagerten Presseinrichtung bearbeitet werden. Hierbei können zum Beispiel Walzen oder Rollen vorgesehen sein, um den Elektroden-Separator-Verbund (ergänzend) zu pressen. Solche Rollen oder Walzen können auf gegenüberliegenden Seiten des Verbunds angeordnet sein.

In den verschiedenen Ausgestaltungen können die Elektrode und / oder die weitere Elektrode als vereinzelte Elektrode oder als Elektrodenband zugeführt und gefügt werden.

Die vorangehend im Zusammenhang mit dem Verfahren zum Herstellen eines Elektroden-Separator-Verbunds für eine Batteriezelle erläuterten Ausgestaltungen können in Verbindung mit der Vorrichtung zum Herstellen des Elektroden-Separator-Verbunds entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung mit einer Vorrichtung zum Herstellen eines Elektroden-Separator-Verbunds für eine Batteriezelle;
- Fig. 2: eine schematische Darstellung mit zwei einander gegenüberliegenden Vakuumwalzen, die jeweils eine Walzenansaugeinrichtung sowie eine Walzendüseneinrichtung aufweisen;
- Fig. 3: eine schematische Darstellung eines Oberflächenabschnitts eines Walzenkörpers einer Vakuumwalze;
- Fig. 4: eine Schnittdarstellung eines Walzenkörpers;
- Fig. 5: eine schematische perspektivische Darstellung einer Vakuumwalze mit Lagerung;
- Fig. 6: eine schematische Darstellung einer Vorrichtung zum Herstellen eines Elektroden-Separator-Verbunds in Form diskretisierter Monozellen;
- Fig. 7: eine schematische Darstellung einer Vorrichtung zum Herstellen eines Elektroden-Separator-Verbunds in Form diskretisierter Halbzellen;
- Fig. 8: eine schematische Darstellung einer Vorrichtung zum Herstellen eines Elektroden-Separator-Verbunds in Form bandförmiger Monozellen;
- Fig. 9: eine schematische perspektivische Darstellung einer weiteren Vorrichtung zum Herstellen eines Elektroden-Separator-Verbunds in Form einer bandförmigen Monozelle;
- Fig. 10: eine schematische Darstellung einer Vorrichtung zum Herstellen eines Elektroden-Separator-Verbunds in Form einer diskretisierten Monozelle und
- Fig. 11: eine schematische perspektivische Darstellung einer weiteren Vorrichtung zum Herstellen eines Elektroden-Separator-Verbunds in Form einer bandförmigen Monozelle.

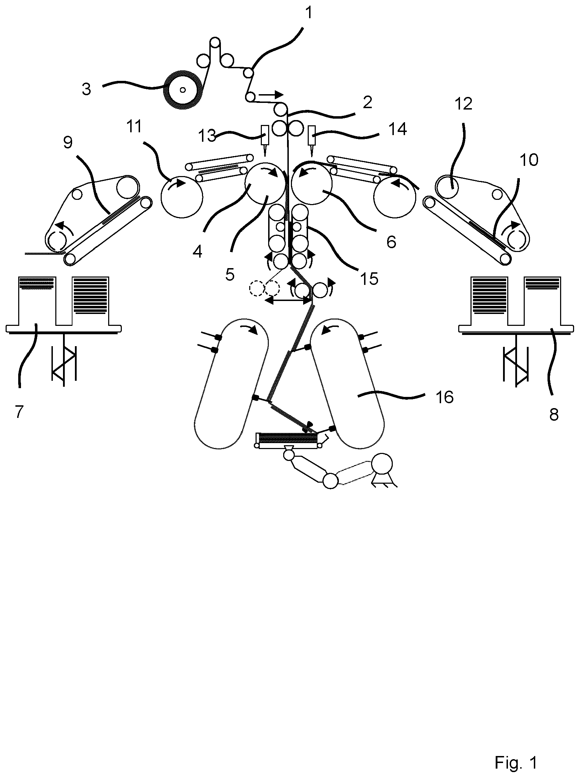

Fig. 1 zeigt eine schematische Darstellung einer Anordnung mit einer Vorrichtung zum Herstellen eines Elektroden-Separator-Verbunds für eine Batteriezelle. Mit Hilfe einer Separatorzuführeinrichtung 1 wird ein Separatormaterial 2, welches hier als Bandmaterial ausgebildet ist, von einer Rolle 3 in vertikaler Transportrichtung einer Fügevorrichtung 4 zugeführt. Auf gegenüberliegenden Seiten des Separatormaterials 2 sind eine erste und eine zweite Vakuumwalze 5, 6 einander gegenüberliegend angeordnet. Aus einem ersten und einem zweiten Reservoir 7, 8 für eine erste und zweite Elektrode 9, 10 werden die Elektroden mit Hilfe einer ersten und einer zweiten Zuführeinrichtung 11, 12 den beiden Vakuumwalzen 5, 6 zugeführt und mit diesen dann zur Fügeeinrichtung 4 transportiert. Auf diesem Weg werden die erste und die zweite Elektrode 9, 10 jeweils mittels eines Haftmittelspenders 13, 14 mit einem Klebstoff versehen, um dann mit Hilfe des Klebstoffs in der Fügeeinrichtung 4 die erste und die zweite Elektrode 9, 10 auf gegenüberliegenden Seiten mit dem Separatormaterial 2 zu fügen. Bei der gezeigten Ausführungsform werden die erste und die zweite Elektrode 9, 10 auf gegenüberliegenden Seiten des Separatormaterials 2 in versetzten Abschnitten gefügt.

Mit Hilfe einer Presseinrichtung 15 wird der Verbund mit Elektroden 5, 6 und Separatormaterial 2 wahlweise ergänzend zusammengedrückt. Eine Faltungseinrichtung 16 dient dazu, dass Bandmaterial des Separatormaterials 2 mit den hieran gefügten ersten und zweiten Elektroden 5, 6 zu falten (Z-Faltung).

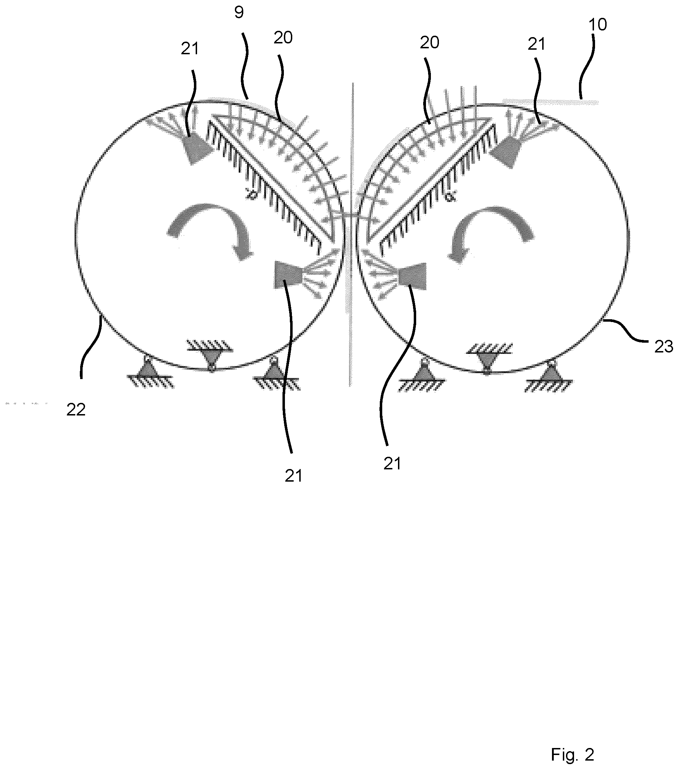

Fig. 2 zeigt eine schematische Darstellung mit den zwei einander gegenüberliegenden Vakuumwalzen 5, 6, die jeweils eine Walzenansaugeinrichtung 20 sowie eine Walzendüseneinrichtung 21 aufweisen, die in getrennten Oberflächenbereichen eines jeweiligen Walzenkörpers 22, 23 für die ersten und die zweite Elektrode 9, 10 einen Ansaugdruck zum Halten am jeweiligen Walzenkörper 22, 23 und einen Überdruck bereitstellen, um die Elektrode vom Walzenkörper 22, 23 zu lösen und beim Fügen lokal gegen das Separatormaterial 2 zu drücken.

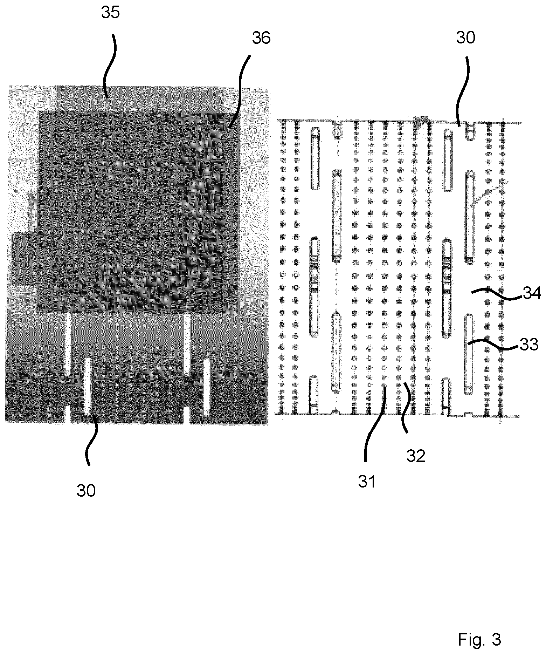

Fig. 3 zeigt eine schematische Darstellung eines Oberflächenabschnitts 30 eines der Walzenkörper 22, 23 mit punktförmigen Ansaugöffnungen 31 in einem ersten Oberflächenbereich 32 des Walzenkörpers und Langlochöffnungen 33 in einem zweiten Oberflächenbereich 34 des Walzenkörpers, welcher von dem ersten Oberflächenbereich 32 verschieden ist. Die punktförmigen Ansaugöffnungen 31 sind der Walzenansaugeinrichtung 20 zugeordnet. Die Langlochöffnungen 33 sind der Walzendüseneinrichtung 21 zugeordnet und dienen dazu, Luft auszudüsen.

Elektroden 35, 36 mit unterschiedlicher Größe können mittels individueller Ansteuerung der punktförmigen Ansaugöffnungen 31 in unterschiedlichen Oberflächenbereichen und / oder innerhalb eines Oberflächenbereichs an dem Walzenkörper gehalten werden.

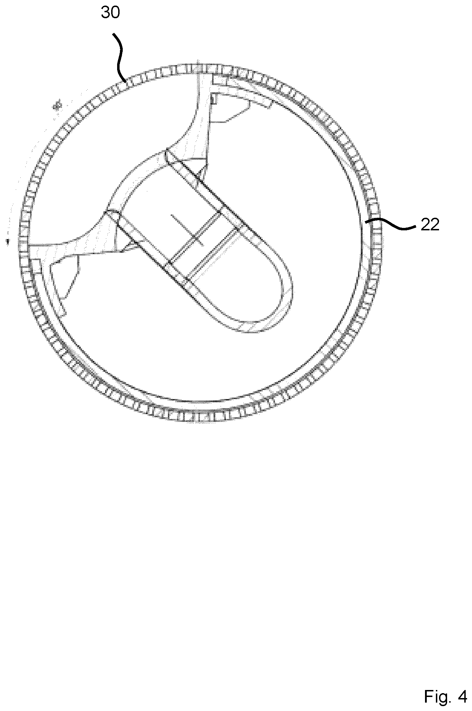

Fig. 4 zeigt eine Schnittdarstellung eines der Walzenkörper 22, 23.

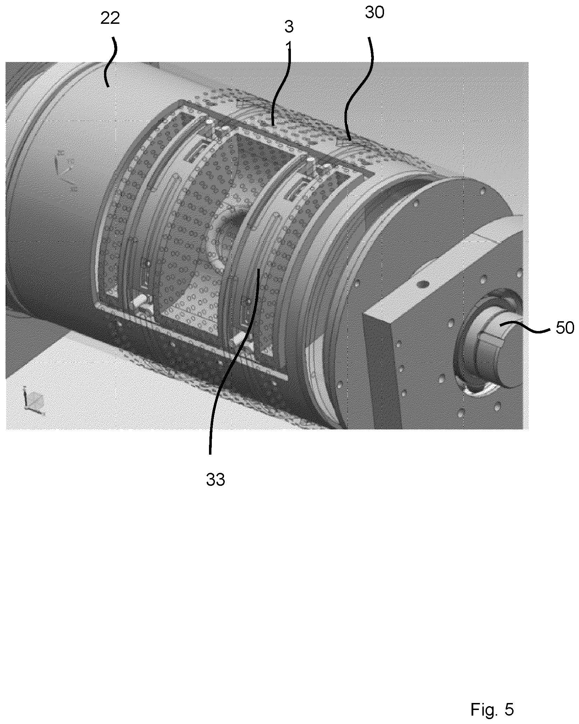

Fig. 5 zeigt eine schematische perspektivische Darstellung einer Vakuumwalze mit Lagerung 50.

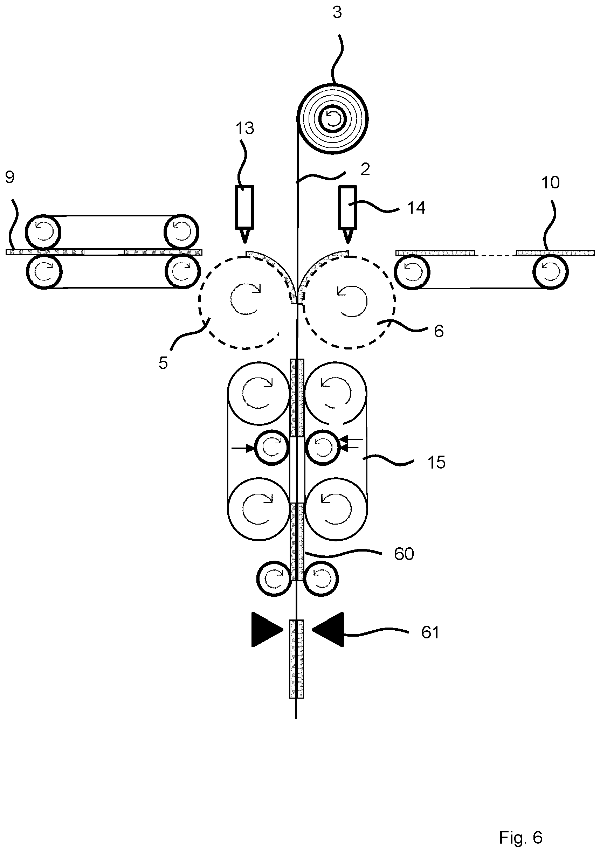

Fig. 6 bis 11 zeigen jeweils eine schematische Darstellung unterschiedlicher Ausführungsformen einer Anordnung für eine Vorrichtung zum Herstellen eines Elektroden-Separator-Verbunds in unterschiedlicher Ausgestaltung. Für gleiche Merkmale werden in den Fig. 6 bis 11 dieselben Bezugszeichen wie in Fig. 1 verwendet.

Das Verfahren und die Vorrichtung dienen zum Herstellen von Elektrode-Separator-Verbünden (ESV) mittels Kleben. Das vorgeschlagene Verfahren erlaubt die Hochdurchsatz-Herstellung von ESV unterschiedlicher Ausführungsformen.

Als erstes Beispiel für eine Ausführungsform wird in Fig. 6 die Herstellung von Monozellen 60 beschrieben. Zur Herstellung der Monozelle 60 wird ein bandförmiger Separator (1) abgewickelt. Diskrete Elektroden 9, 10 werden in einem Winkel von weniger als 180° von beiden Seiten zum Separatormaterial 2, vorzugsweise in einem Winkel von 90°, mit Hilfe der Zuführeinrichtungen 11, 12, vorzugsweise durch ein Vakuumtransportband, an die Vakuumwalzen 5, 6 übergeben.

Bei den Vakuumwalzen 5, 6 handelt es sich um rotierende Lochwalzen, die mit Unterdruck beaufschlagt werden. Ein innerhalb jeder Lochwalze (Walzenkörper) statisch an einer Hohlwelle angebrachte Unterdruckeinsatz ermöglicht dabei die Abdichtung zur Lochwalze. Durch den Unterdruck wird ein Luftstrom in das Innere der Walze erzeugt, wodurch die Elektrode 5, 6 angesaugt und kraftschlüssig bewegt wird. Die rotatorische Bewegung der Lochwalze um die Hohlwelle ermöglicht eine kraftschlüssige Umlenkung der Elektroden 9, 10 vom ursprünglichen Zuführwinkel zu einer parallelen Ausrichtung zum Separatormaterial 2. Die Vakuumwalzen 5, 6 haben dabei dieselbe Umfangsgeschwindigkeit wie die translatorische Geschwindigkeit des Separatormaterials 2 (Zuführgeschwindigkeit). Damit es zu einem sauberen Ansaugen bzw. zu einem sauberen Ablösevorgang kommt, werden die Elektroden 9, 10 vor und nach dem Unterdruckbereich mittels Luftdüsen abgehalten.

Um die Elektroden 9, 10 auf dem Separatormaterial 2 zu fixieren, wird erfindungsgemäß auf eine Seite der zugeführten Elektroden 9, 10 mittels Haftmittelspenders 13, 14 ein Klebstoff appliziert. Der Klebstoff kann punkt-, linien- oder flächenweise appliziert werden, wobei eine punktweise Applikation bevorzugt wird. Als Haftmittelspender 13, 14 können Spritz-, Fließdüsen-, Walzen-, Gieß- oder Schmelzauftragssysteme zum Einsatz kommen, wobei vorzugsweise Spritzauftragssysteme eingesetzt werden. Die Ausführungsform nach Fig. 6 zeigt einen Fließauftragssystem mit einem Punktauftragssystem.

Auf der Grundlage von durchgeführten Untersuchungen beeinflusst die sogenannte offene Wartezeit der Klebeverbindung, d.h. die Zeitspanne nach dem Auftragen des Klebstoffes bis zum Kontakt beider Fügepartner, hauptsächlich die Steifigkeit der Fügeverbindung. Durch die Positionierung des Haftmittelspenders 13, 14 kann die geschlossene Wartezeit unter Berücksichtigung der Vorschubgeschwindigkeit eingestellt werden. Bei einer zur Vakuumwalze 5, 6 näheren Positionierung ergibt sich damit eine kürzere geschlossene Wartezeit im Vergleich zu einer weiter entfernten Positionierung. Weiterhin beeinflusst auch die sogenannte geschlossene Wartezeit die Steifigkeit der Fügeverbindung. Die geschlossene Wartezeit ist dabei die Zeitspanne, in der beide Fügepartner ohne Scherbelastung zusammengehalten werden. Diese Zeit kann mittels Länge der Anpressvorrichtung 15 eingestellt werden.

Die diskreten Elektroden 9, 10 werden so rechts und links mit dem bandförmigen Separatormaterial 2 gefügt. Die rechts- und linksseitige Zuführung der Elektroden 9, 10 mittels der ersten und der zweiten Zuführeinrichtung 11, 12 sowie der Vakuumwalzen 5, 6 ist auf den Separatorvorschub synchronisiert. Die Flächenschwerpunkte der zugeführten und gefügten Elektroden 9, 10 überdecken sich, um eine maximale Ausbeute der Kapazität der Batteriezelle zu erhalten.

Die Vorrichtung zeichnet sich weiterhin durch die parallele Ausrichtung der beiden Vakuumwalzen 5, 6 aus. Der Abstand zwischen den Vakuumwalzen 5, 6 beträgt zum Beispiel genau der aufsummierten Dicke der Elektrode 9, 10 und des Separatormaterials 2.

Nach dem Aufbringen der diskreten Elektroden 9, 10 durch die Vakuumwalzen 5, 6 auf den bandförmigen Separatormaterial 2, wird der Verbund mittels der Anpressvorrichtung 15 einem definierten Druck ausgesetzt, um eine Haftung der Elektroden 9, 10 auf dem Separatormaterial 2 sicherzustellen. Dieser Druck wird durch zwei gegenläufig rotierende Bänder erzeugt, zwischen denen der Verbund läuft. Optional kann das Anpressen auch durch die Vakuumwalzen 5, 6 erfolgen, wenn eine definierte Vorspannung eingestellt wird.

Das Zuführen und das Fügen der diskreten Elektroden 9, 10 erfolgt kontinuierlich, wobei jeweils zwischen den gleichartigen Elektroden 9, 10 ein definierter Abstand einzuhalten ist. Im letzten Schritt wird der bandförmige geklebte ESV mittels einer Trenneinrichtung 61 zugeschnitten. Der Zuschnitt erfolgt hierbei in über die Elektroden 9, 10 ragenden Bereichen des Separatormaterials 2. Zweckgemäß kann das Zuschneiden durch ein Rollenmesser oder einen Laser erfolgen.

In einem letzten Schritt können die zugeschnittenen ESVs magaziniert oder direkt in den stapelnden oder z-faltenden ESV-Herstellungsprozess durch eine Handhabungseinrichtung zugeführt werden.

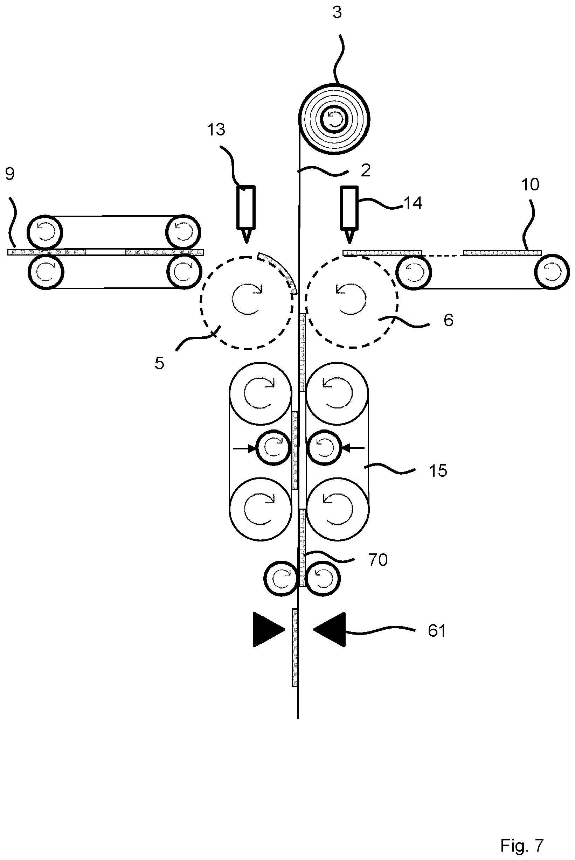

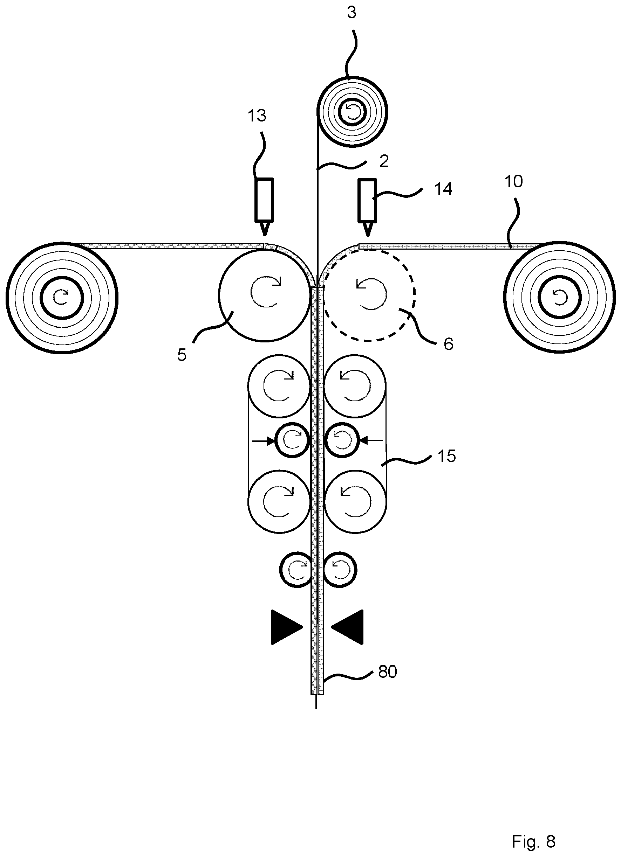

Fig. 7 zeigt eine schematische Darstellung einer Vorrichtung zum Herstellen eines Elektroden-Separator-Verbunds in Form diskretisierter Halbzellen 70. In Fig. 8 ist eine schematische Darstellung einer Vorrichtung zum Herstellen eines Elektroden-Separator-Verbunds in Form bandförmiger Monozellen 80 gezeigt.

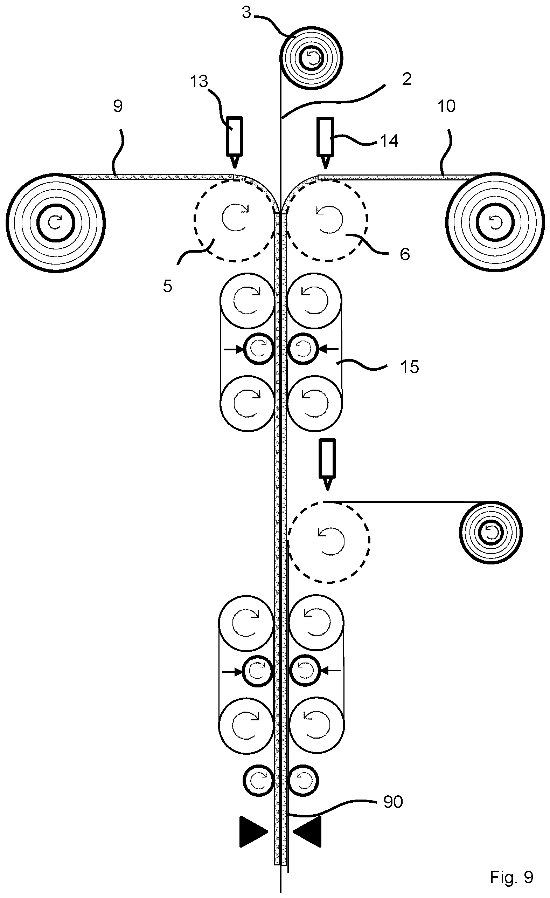

Fig. 9 zeigt eine schematische perspektivische Darstellung einer weiteren Vorrichtung zum Herstellen eines Elektroden-Separator-Verbunds in Form einer bandförmigen Monozelle 90.

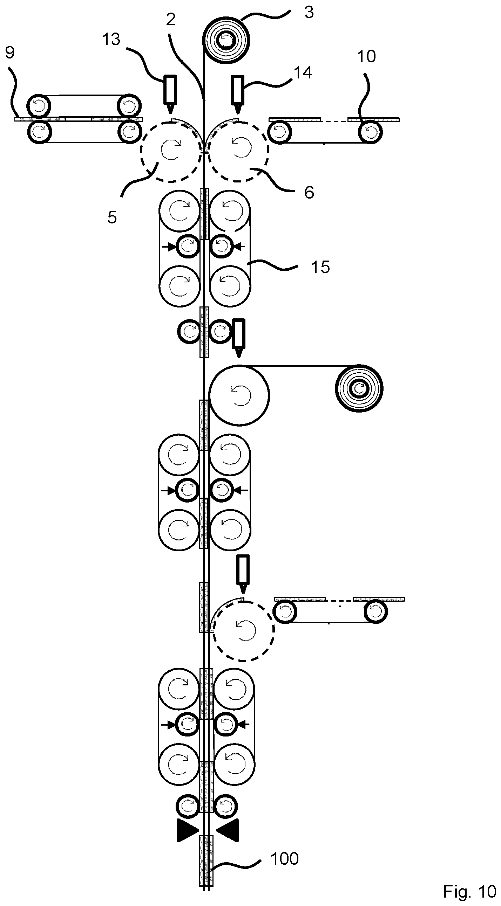

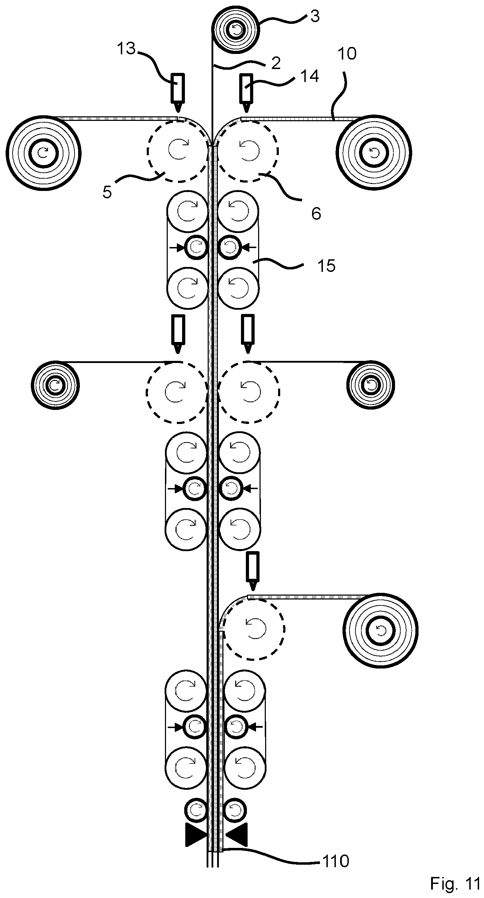

Fig. 10 zeigt eine schematische Darstellung einer Vorrichtung zum Herstellen eines Elektroden-Separator-Verbunds in Form einer diskretisierten Monozelle 100, und Fig. 11 zeigt eine schematische perspektivische Darstellung einer weiteren Vorrichtung zum Herstellen eines Elektroden-Separator-Verbunds in Form einer bandförmigen Monozelle 110.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Herstellen eines Elektroden-Separator-Verbunds für eine Batteriezelle, mit:
- Zuführen eines Separatormaterials (2) mittels einer Separatorzuführeinrichtung (1);
- Zuführen einer Elektrode (9; 10) mittels einer Elektrodenzuführeinrichtung (11; 12);
- Herstellen eines Elektroden-Separator-Verbunds mittels einer Fügeeinrichtung (4), wobei hierbei die Elektrode (9; 10) mit dem Separatormaterial (2) gefügt wird und zwischen der Elektrode (9; 10) und dem Separatormaterial (2) eine Haftverbindung ausgebildet wird mittels einer Klebstoffapplikation auf eine Seite der Elektrode;
wobei die Elektrode (9; 10) und das Separatormaterial (2) unter Verwendung wenigstens einer Vakuumwalze (5; 6) gefügt werden, die eingerichtet ist, die Elektrode (9; 10) wenigstens zum Zuführen mittels einer Walzenansaugeinrichtung (20) in einem ersten Oberflächenbereich (32) eines Walzenkörpers (22; 23) der Vakuumwalze (5; 6) an dem Walzenkörper (22; 23) zu halten und zum Fügen mittels einer Walzendüseneinrichtung (21) in einem zweiten Oberflächenbereich (34) des Walzenkörpers (22; 23), welcher von dem ersten Oberflächenbereich (32) verschieden ist, von der Vakuumwalze (5; 6) weg zu dem Separatormaterial (2) hin zu drücken, welches zum Fügen durch eine Stützeinrichtung gestützt wird, die der Vakuumwalze (5; 6) gegenüberliegend angeordnet ist.

2. Verfahren nach Anspruch 1, **dadurch gekennzeichnet, dass** vor dem Fügen auf der Elektrode (9; 10) und / oder dem Separatormaterial (2) in einem ersten Oberflächenbereich ein Haftmittel aufgetragen wird und die Elektrode (9; 10) beim Fügen zum Ausbilden einer Haftverbindung zwischen Elektrode (9; 10) und Separatormaterial (2) in dem ersten Oberflächenbereich oder einem dem ersten Oberflächenbereich am Separatormaterial (2) gegenüberliegenden Bereich mittels der Walzendüseneinrichtung (21) von der Vakuumwalze (5; 6) weg zu dem Separatormaterial (2) hin gedrückt wird.

3. Verfahren nach Anspruch 2, **dadurch gekennzeichnet, dass** ein zweiter Elektrodenoberflächenbereich, welcher von dem ersten Elektrodenoberflächenbereich verschieden ist, frei von Haftmittel bleibt und der zweite Elektrodenoberflächenbereich beim Fügen frei vom einer Druckbeaufschlagung durch die Walzendüseneinrichtung (21) ist.

4. Verfahren nach Anspruch 2 oder 3, **dadurch gekennzeichnet, dass** die Haftverbindung mittels eines Klebeprozesses frei von einer Wärmezufuhr ausgebildet wird.

5. Verfahren nach mindestens einem der vorangehenden Ansprüche, **dadurch gekennzeichnet, dass** die Elektrode (9; 10) beim Fügen mittels mechanischer Druckbeaufschlagung durch den Walzenkörper (22; 23) der Vakuumwalze (5; 6) gegen das Separatormaterial (2) gedrückt wird.

6. Verfahren nach mindestens einem der vorangehenden Ansprüche, dadurch **ge-kennzeichnet,** dass die Walzenansaugeinrichtung (20) in dem ersten Oberflächenbereich (32) und die Walzendüseneinrichtung (21) in dem zweiten Oberflächenbereich (34) des Walzenkörpers (22; 23) beim Zuführen und beim Fügen unabhängig voneinander gesteuert werden, um die Elektrode (9; 10) bereichsweise an dem Walzenkörper (22; 23) zu halten und zu dem Separatormaterial (2) hin zu drücken.

7. Verfahren nach mindestens einem der vorangehenden Ansprüche, dadurch **ge-kennzeichnet**, dass die Walzendüseneinrichtung (21) in dem zweiten Oberflächenbereich (34) in Bezug auf die Walzenansaugeinrichtung (20) in einem ersten Oberflächenbereich (32) des Walzenkörpers (22; 23) zumindest einer der folgenden Anordnungen entsprechend ausgebildet ist: seitlich benachbart und zwischen mehreren zweiten Oberflächenbereichen.

8. Verfahren nach mindestens einem der vorangehenden Ansprüche, dadurch **ge- kennzeichnet**, dass eine Vakuumwalze (5; 6) mit zumindest einer der folgenden Ausgestaltungen verwendet wird:
- Walzenansaugeinrichtung mit punktförmigen Ansaugöffnungen (31) in dem ersten Oberflächenbereich (32) und
- Walzendüseneinrichtung mit Langlochdüsen (33) in dem zweiten Oberflächenbereich (34).

9. Verfahren nach mindestens einem der vorangehenden Ansprüche, dadurch **ge- kennzeichnet**, dass die Elektrode (9; 10) mittels der Vakuumwalze (5; 6) beim Zuführen aus einer ersten Transportrichtung in eine zweite Transportrichtung umgelenkt wird, die quer zur ersten Transportrichtung verläuft und in welcher das Fügen ausgeführt wird.

10. Verfahren nach mindestens einem der vorangehenden Ansprüche, **dadurch gekennzeichnet, dass** die Stützeinrichtung mit einer weiteren Vakuumwalze (6; 5) gebildet wird, die eingerichtet ist, der Arbeitsweise der Vakuumwalze (5; 6) entsprechend verwendet zu werden, eine weitere Elektrode (10; 9) mit Separatormaterial (2) zu fügen.

11. Verfahren nach mindestens einem der vorangehenden Ansprüche, **dadurch gekennzeichnet, dass** das Separatormaterial (2) mittels der Separatorzuführeinrichtung (1) als ein Bandmaterial mit einer Bandgeschwindigkeit von wenigstens etwa 500 mm / s zugeführt wird.

12. Verfahren nach mindestens einem der vorangehenden Ansprüche, **dadurch gekennzeichnet, dass** der Elektroden-Separator-Verbund nach dem Fügen mittels einer der Vakuumwalze (5; 6) und der Stützeinrichtung nachgelagerten Presseinrichtung (15) bearbeitet wird.

13. Vorrichtung zum Herstellen eines Elektroden-Separator-Verbunds für eine Batteriezelle, mit:
- einer Separatorzuführeinrichtung (1), die eingerichtet ist, ein Separatormaterial (2) zuzuführen;
- einer Elektrodenzuführeinrichtung (11; 12), die eingerichtet ist, eine Elektrode (9; 10) zuzuführen;
- einem Haftmittelspender (13; 14), der eingerichtet ist, auf eine Seite der Elektrode (9; 10) einen Klebstoff zu applizieren, um die Elektrode (9; 10) auf dem Separatormaterial (2) zu fixieren;
- einer Fügeeinrichtung (4), die eingerichtet ist, einen Elektroden-Separator-Verbund herzustellen, wobei hierbei die Elektrode (9; 10) mit dem Separatormaterial (2) gefügt wird und zwischen der Elektrode (9; 10) und dem Separatormaterial (2) eine Haftverbindung ausgebildet wird;
- wenigstens einer Vakuumwalze (5; 6); und
- einer Stützeinrichtung, die der Vakuumwalze (5; 6) gegenüberliegend angeordnet ist;
wobei die Vakuumwalze (5; 6) eingerichtet ist, die Elektrode (9; 10) wenigstens beim Zuführen mittels einer Walzenansaugeinrichtung (20) in einem ersten Oberflächenbereich (32) eines Walzenkörpers (22; 23) der Vakuumwalze (5; 6) an dem Walzenkörper (22; 23) zu halten und zum Fügen mittels einer Walzendüseneinrichtung (21) in einem zweiten Oberflächenbereich (34) des Walzenkörpers (22; 23), welcher von dem ersten Oberflächenbereich (32) verschieden ist, von der Vakuumwalze (5; 6) weg zu dem Separatormaterial (2) hin zu drücken.

## Claims

1. A method for producing an electrode-separator assembly for a battery cell, comprising:
- supplying a separator material (2) by means of a separator supply device (1);
- supplying an electrode (9; 10) by means of an electrode supply device (11; 12);
- producing an electrode-separator assembly by means of a joining device (4),
the electrode (9; 10) being joined to the separator material (2) and an adhesive bond being formed between the electrode (9; 10) and the separator material (2) by means of an adhesive application to one side of the electrode;
wherein the electrode (9; 10) and the separator material (2) are joined using at least one vacuum roller (5; 6) which is configured to, at least for supply, hold the electrode (9; 10) by means of a roller suction device (20), in a first surface region (32) of a roller body (22; 23) of the vacuum roller (5; 6), , on the roller body (22; 23) and, by means of a roller nozzle device (21), in a second surface region (34) of the roller body (22; 23) which is different from the first surface region (32), to push the electrode away from the vacuum roller (5; 6) towards the separator material (2) for joining, the separator material being supported for joining by a support device which is arranged opposite the vacuum roller (5; 6).

2. The method according to claim 1, **characterized in that** before joining, a bonding agent is applied onto the electrode (9; 10) and/or the separator material (2) in a first surface region, and, during joining, the electrode (9; 10) is pushed away from the vacuum roller (5; 6) towards the separator material (2) by means of the roller nozzle device (21) to form an adhesive bond between the electrode (9; 10) and the separator material (2) in the first surface region or in a region opposite the first surface region on the separator material (2).

3. The method according to claim 2, **characterized in that** a second electrode surface region, which is different from the first electrode surface region, remains free of bonding agent and the second electrode surface region is free of pressurization by the roller nozzle device (21) during joining.

4. The method according to claim 2 or 3, **characterized in that** the adhesive bond is formed by means of an adhesive bonding process free of heat supply.

5. The method according to at least one of the preceding claims, **characterized in that** the electrode (9; 10) is pushed against the separator material (2) during joining by means of mechanical pressurization by the roller body (22; 23) of the vacuum roller (5; 6).

6. The method according to at least one of the preceding claims, **characterized in that** the roller suction device (20) in the first surface region (32) and the roller nozzle device (21) in the second surface region (34) of the roller body (22; 23) are controlled independently of each other during supplying and joining in order to hold the electrode (9; 10) in certain regions on the roller body (22; 23) and to push the electrode towards the separator material (2).

7. The method according to at least one of the preceding claims, **characterized in that** the roller nozzle device (21) is formed in the second surface region (34) in relation to the roller suction device (20) in a first surface region (32) of the roller body (22; 23) according to at least one of the following arrangements: laterally adjacent and between a plurality of second surface regions.

8. The method according to at least one of the preceding claims, **characterized in that** a vacuum roller (5; 6) having at least one of the following configurations is used:
- roller suction device with punctiform suction openings (31) in the first surface region (32) and
- roller nozzle device with slotted-hole nozzles (33) in the second surface region (34).

9. The method according to at least one of the preceding claims, **characterized in that** the electrode (9; 10) is deflected by means of the vacuum roller (5; 6) during supply from a first transport direction into a second transport direction which runs transverse to the first transport direction and in which the joining is carried out.

10. The method according to at least one of the preceding claims, **characterized in that** the supporting device is formed with a further vacuum roller (6; 5) which is configured to be used in accordance with the mode of operation of the vacuum roller (5; 6) to join a further electrode (10; 9) to separator material (2).

11. The method according to at least one of the preceding claims, **characterized in that** the separator material (2) is supplied by means of the separator supply device (1) as a strip material at a strip speed of at least about 500 mm / s.

12. The method according to at least one of the preceding claims, **characterized in that** the electrode-separator assembly is processed after joining by means of a pressing device (15) arranged downstream of the vacuum roller (5; 6) and the supporting device.

13. A device for producing an electrode-separator assembly for a battery cell, comprising:
- a separator supply device (1) which is configured to supply a separator material (2);
- an electrode supply device (11; 12) which is configured to supply an electrode (9; 10);
- a bonding agent dispenser (13; 14), which is configured to apply an adhesive to one side of the electrode (9; 10) in order to fix the electrode (9; 10) to the separator material (2);
- a joining device (4) which is configured to produce an electrode-separator assembly, the electrode (9; 10) being joined to the separator material (2) and an adhesive bond being formed between the electrode (9; 10) and the separator material (2);
- at least one vacuum roller (5; 6); and
- a supporting device which is arranged opposite the vacuum roller (5; 6);
wherein the vacuum roller (5; 6) is configured to hold, at least during supply, the electrode (9; 10) by means of a roller suction device (20) in a first surface region (32) of a roller body (22; 23) of the vacuum roller (5; 6) on the roller body (22; 23) and, by means of a roller nozzle device (21) in a second surface region (34) of the roller body (22; 23), which is different from the first surface region (32), to push the electrode away from the vacuum roller (5; 6) towards the separator material (2) for joining.

## Revendications

1. Procédé de fabrication d'une combinaison d'électrodes et de séparateur pour une cellule de batterie, comprenant :
- l'alimentation d'un matériau de séparateur (2) au moyen d'un dispositif d'alimentation en séparateur (1) ;
- l'alimentation d'une électrode (9 ; 10) au moyen d'un dispositif d'alimentation en électrode (11 ; 12) ;
- la fabrication d'une combinaison d'électrodes et de séparateur au moyen d'un dispositif d'assemblage (4), dans lequel l'électrode (9 ; 10) est ainsi assemblée avec le matériau de séparateur (2) et une liaison adhésive est réalisée entre l'électrode (9 ; 10) et le matériau de séparateur (2) par application de colle sur un côté de l'électrode ;
dans lequel l'électrode (9 ; 10) et le matériau de séparateur (2) sont assemblés à l'aide d'au moins un rouleau à vide (5 ; 6), lequel est conçu pour maintenir l'électrode (9 ; 10) sur un corps de rouleau (22 ; 23), au moins pour l'alimentation, au moyen d'un dispositif d'aspiration de rouleau (20), dans une première région de surface (32) du corps de rouleau (22 ; 23) du rouleau à vide (5 ; 6) et pour la pousser à distance du rouleau à vide (5 ; 6), pour l'assemblage, au moyen d'un dispositif à buse de rouleau (21), dans une deuxième région de surface (34) du corps de rouleau (22 ; 23), laquelle est différente de la première région de surface (32), vers le matériau de séparateur (2), lequel est soutenu par un dispositif de soutien pour l'assemblage, lequel est disposé en face du rouleau à vide (5 ; 6).

2. Procédé selon la revendication 1, **caractérisé en ce qu'**un adhésif est appliqué dans une première région de surface sur l'électrode (9 ; 10) et/ou le matériau de séparateur (2) avant l'assemblage, et l'électrode (9 ; 10) est poussée à distance du rouleau à vide (5 ; 6) vers le matériau de séparateur (2), pendant l'assemblage, au moyen du dispositif à buse de rouleau (21), pour former une liaison adhésive entre l'électrode (9 ; 10) et le matériau de séparateur (2), dans la première région de surface ou dans une région opposée à la première région de surface sur le matériau de séparateur (2).

3. Procédé selon la revendication 2, **caractérisé en ce qu'**une deuxième région de surface d'électrode, différente de la première région de surface d'électrode, reste exempte d'adhésif, et la deuxième région de surface d'électrode n'est pas mise sous pression par le dispositif à buse de rouleau (21) pendant l'assemblage.

4. Procédé selon la revendication 2 ou 3, **caractérisé en ce que** la liaison adhésive est réalisée au moyen d'un processus de collage sans apport de chaleur.

5. Procédé selon l'une au moins des revendications précédentes, **caractérisé en ce que** pendant l'assemblage, l'électrode (9 ; 10) est poussée contre le matériau de séparateur (2) au moyen d'une mise sous pression mécanique par le corps de rouleau (22 ; 23) du rouleau à vide (5 ; 6).

6. Procédé selon l'une au moins des revendications précédentes, **caractérisé en ce que** le dispositif d'aspiration de rouleau (20) dans la première région de surface (32) et le dispositif à buse de rouleau (21) dans la deuxième région de surface (34) du corps de rouleau (22 ; 23) sont commandés indépendamment l'un de l'autre pendant l'alimentation et l'assemblage, afin de maintenir l'électrode (9 ; 10) par endroits sur le corps de rouleau (22 ; 23) et de la pousser vers le matériau de séparateur (2).

7. Procédé selon l'une au moins des revendications précédentes, **caractérisé en ce que** par rapport au dispositif d'aspiration de rouleau (20) dans une première région de surface (32) du corps de rouleau (22 ; 23), le dispositif à buse de rouleau (21) dans la deuxième région de surface (34) est réalisé selon l'un au moins des agencements suivants : de façon latéralement adjacente et entre plusieurs deuxièmes régions de surface.

8. Procédé selon l'une au moins des revendications précédentes, **caractérisé en ce qu'**un rouleau à vide (5 ; 6) avec l'une au moins des configurations suivantes est utilisé :
- dispositif d'aspiration de rouleau avec orifices d'aspiration ponctuels (31) dans la première région de surface (32) et
- dispositif à buse de rouleau avec buses à trou oblong (33) dans la deuxième région de surface (34).

9. Procédé selon l'une au moins des revendications précédentes, **caractérisé en ce que** pendant l'alimentation, l'électrode (9 ; 10) est déviée au moyen du rouleau à vide (5 ; 6) à partir d'une première direction de transport vers une deuxième direction de transport, laquelle s'étend transversalement à la première direction de transport et dans laquelle est réalisé l'assemblage.

10. Procédé selon l'une au moins des revendications précédentes, **caractérisé en ce que** le dispositif de soutien est formé avec un rouleau à vide supplémentaire (6 ; 5), lequel est conçu pour être utilisé selon le fonctionnement du rouleau à vide (5 ; 6), pour assembler une électrode supplémentaire (10 ; 9) avec le matériau de séparateur (2).

11. Procédé selon l'une au moins des revendications précédentes, **caractérisé en ce que** le matériau de séparateur (2) est alimenté au moyen du dispositif d'alimentation en séparateur (1) sous forme de matériau en bande avec une vitesse de bande minimum d'environ 500 mm/s.

12. Procédé selon l'une au moins des revendications précédentes, **caractérisé en ce qu'**après l'assemblage, la combinaison d'électrodes et de séparateur est traitée au moyen d'un dispositif de pression (15) installé en aval du rouleau à vide (5 ; 6) et du dispositif de soutien.

13. Système de fabrication d'une combinaison d'électrodes et de séparateur pour une cellule de batterie, comprenant :
- un dispositif d'alimentation en séparateur (1) conçu pour alimenter un matériau de séparateur (2) ;
- un dispositif d'alimentation en électrode (11 ; 12) conçu pour alimenter une électrode (9 ; 10) ;
- un distributeur d'adhésif (13 ; 14) conçu pour appliquer une colle sur un côté de l'électrode (9 ; 10) afin de fixer l'électrode (9 ; 10) sur le matériau de séparateur (2) ;
- un dispositif d'assemblage (4) conçu pour fabriquer une combinaison d'électrodes et de séparateur, dans lequel l'électrode (9 ; 10) est ainsi assemblée avec le matériau de séparateur (2) et une liaison adhésive est réalisée entre l'électrode (9 ; 10) et le matériau de séparateur (2) ;
- au moins un rouleau à vide (5 ; 6) ; et
- un dispositif de soutien, disposé en face du rouleau à vide (5 ; 6) ;
dans lequel le rouleau à vide (5 ; 6) est conçu pour maintenir l'électrode (9 ; 10) sur un corps de rouleau (22 ; 23), au moins pendant l'alimentation, au moyen d'un dispositif d'aspiration de rouleau (20), dans une première région de surface (32) d'un corps de rouleau (22 ; 23) du rouleau à vide (5 ; 6) et pour la pousser à distance du rouleau à vide (5 ; 6), pour l'assemblage, au moyen d'un dispositif à buse de rouleau (21), dans une deuxième région de surface (34) du corps de rouleau (22 ; 23), laquelle est différente de la première région de surface (32), vers le matériau de séparateur (2).
